(19) **Europäisches Patentamt**
**European Patent Office**
**Office européen des brevets**

(11) **EP 4 756 676 A1**

(12) **EUROPEAN PATENT APPLICATION**

(43) Date of publication:
**10.06.2026 Bulletin 2026/24**

(21) Application number: **25219904.7**

(22) Date of filing: **01.12.2025**

(51) International Patent Classification (IPC):
**G06N 3/0464** *(2023.01)* **G06N 3/098** *(2023.01)*
**G06N 5/01** *(2023.01)* **G06N 20/10** *(2019.01)*
**G06N 20/20** *(2019.01)* **G06N 3/09** *(2023.01)*

(52) Cooperative Patent Classification (CPC):
**G06N 3/098; G06N 3/0464; G06N 3/09; G06N 5/01;
G06N 20/10; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.12.2024 FI 20246410**

(71) Applicant: **Nokia Technologies Oy
02610 Espoo (FI)**

(72) Inventors:
• **CADET, Xavier
Cambridge, CB3 0FA (GB)**
• **QENDRO, Lorena
Cambridge, CB1 8DZ (GB)**
• **MALEKZADEH, Mohammad
Cambridge, CB3 0FA (GB)**

(74) Representative: **Smith, Robert Andrew et al
Venner Shipley LLP
TIDE Bankside
8 Emerson Street
London SE1 9DU (GB)**

(54) **METHODS FOR FEDERATED LEARNING**

(57)     A method, apparatus, and computer program are described comprising: receiving an input; and determining a classification of the input using a machine learning model, the machine learning model comprising a local part and a collaboratively learned part, the determining comprising: determining extracted features of the input using a feature extractor of the collaboratively learned part, the feature extractor being caused to extract features of the input; determining a set of similarity scores using a prototype layer of the local part of the model, the prototype layer being caused to determine similarities between extracted features of the input and a set of trained prototypes of the prototype layer; and determining a classification of the input using a prototypical classifier of the local part of the model, the prototypical classifier being caused determine the classification based on the similarity scores.

*Fig. 6*

## Description

### Field

Example embodiments may relate to apparatuses, and methods for collaborative machine learning.

### Background

In federated learning (FL) methods, machine learning steps are decentralized across a plurality of clients, which may train a model on their own local data set(s). The results of this decentralized learning may be aggregated across the plurality of clients to obtain an updated model. Models trained in federated learning methods may be personalized to a particular client to some degree. There is an interest in providing federated learning methods that balance generalizability, personalization, and privacy.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an apparatus comprising: means for training a machine learning model comprising: training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features of an input; and training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising: a prototype layer, caused to determine similarity scores between extracted features and a plurality of trainable prototypes; and a prototypical classifier, caused to receive the similarity scores and output a classification of the input based on the similarity scores.

In some examples, the apparatus further comprises: means for sending an indication of the local updates to the first set of trainable parameters to a device participating in collaborative learning; means for updating the second set of trainable parameters of the machine learning model based on the obtained local updates to the second set of trainable parameters; means for receiving from a device participating in the collaborative learning an indication of updates to the first set of trainable parameters; and means for updating the first set of trainable parameters based on the indicated updates.

In some examples, the apparatus further comprises means for receiving the feature extractor of the collaboratively learned part of the model, and the local classifier of the local part of the model.

In some examples the means for training the machine learning model is configured to, in at least an initial round of training, train the first set of trainable parameters without training the second set of trainable parameters.

In some examples, the collaboratively learned part of the machine learning model further comprises a collaboratively learned classifier configured to receive a representation of input data from the feature extractor and output a classification of the input data; and the machine learning model further comprises a joint predictor configured to determine a classification based on classifications output by the local and collaboratively learned classifiers.

In some examples, the means for training the machine learning model are configured to alternate between: training the feature extractor and the local classifier; and training the feature extractor and the collaboratively learned classifier; on a first dataset.

In some examples, the feature extractor of the collaboratively learned part is configured to extract features by, for an input, defining a plurality of regions of said input and outputting a plurality of feature vectors, wherein respective feature vectors of the plurality of feature vectors are representative of features of data from respective defined regions of the plurality of defined regions of the input.

In some examples, the prototype layer is configured to determine similarity scores between feature vectors of the extracted features and the trainable prototypes.

In some examples, the trainable prototypes comprise respective trainable vectors in the same vector space as the plurality of feature vectors. In some examples, the trainable prototypes comprise respective trainable radii, and determining a similarity between a feature vector and trainable prototype comprises determining a similarity score based on at least in part on whether the feature vector lies within the trainable radius of the trainable vector of the trainable prototype.

In some examples, the classification comprises a probability distribution, the probability distribution comprising a plurality of probabilities, wherein probabilities of the plurality indicate probabilities of an input corresponding to respective classes of a set of classes.

In some examples the input comprises image data.

In some examples the input comprises sensor data.

A second aspect provides a method comprising: training a machine learning model comprising: training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features; and training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising: a prototype layer, caused to determine similarity scores between extracted features and a plurality of trainable prototypes; and a prototypical classifier, caused to receive the similarity scores and output a classification of the input based on the similarity scores.

In some examples, the method further comprises: sending an indication of the local updates to the first set of trainable parameters to a device participating in collaborative learning; updating the second set of trainable parameters of the machine learning model based on the obtained local updates to the second set of trainable parameters; receiving from a device participating in the collaborative learning an indication of updates to the first set of trainable parameters; and updating the first set of trainable parameters based on the indicated updates.

In some examples, the method further comprises receiving the feature extractor of the collaboratively learned part of the model, and the local classifier of the local part of the model.

In some examples training the machine learning model comprises, in at least an initial round of training, training the first set of trainable parameters without training the second set of trainable parameters.

In some examples, the collaboratively learned part of the machine learning model further comprises a collaboratively learned classifier configured to receive a representation of input data from the feature extractor and output a classification of the input data; and the machine learning model further comprises a joint predictor configured to determine a classification based on classifications output by the local and collaboratively learned classifiers.

In some examples, training the machine learning model comprises to alternating between: training the feature extractor and the local classifier; and training the feature extractor and the collaboratively learned classifier; on a first dataset.

In some examples, the feature extractor of the collaboratively learned part is configured to extract features by, for an input, defining a plurality of regions of said input and outputting a plurality of feature vectors, wherein respective feature vectors of the plurality of feature vectors are representative of features of data from respective defined regions of the plurality of defined regions of the input.

In some examples, the prototype layer is configured to determine similarity scores between feature vectors of the extracted features and the trainable prototypes.

In some examples, the trainable prototypes comprise respective trainable vectors in the same vector space as the plurality of feature vectors. In some examples, the trainable prototypes comprise respective trainable radii, and determining a similarity between a feature vector and trainable prototype comprises determining a similarity score based on at least in part on whether the feature vector lies within the trainable radius of the trainable vector of the trainable prototype.

In some examples, the classification comprises a probability distribution, the probability distribution comprising a plurality of probabilities, wherein probabilities of the plurality indicate probabilities of an input corresponding to respective classes of a set of classes.

In some examples the input comprises image data.

In some examples the input comprises sensor data.

A third aspect provides a computer program comprising a set of instructions which, when executed on an apparatus, is configured to cause the apparatus to carry out a method comprising: training a machine learning model comprising: training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features; and training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising: a prototype layer, caused to determine similarity scores between extracted features and a plurality of trainable prototypes; and a prototypical classifier, caused to receive the similarity scores and output a classification of the input based on the similarity scores.

In some example embodiments, the third aspect may include any other feature mentioned with respect to the method of the second aspect.

A fourth aspect provides a non-transitory computer-readable medium having stored thereon computer-readable code, which, when executed by at least one processor, causes the at least one processor to perform a method comprising: training a machine learning model comprising: training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features; and training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising: a prototype layer, caused to determine similarity scores between extracted features and a plurality of trainable prototypes; and a prototypical classifier, caused to receive the similarity scores and output a classification of the input based on the similarity scores.

The fourth aspect may include any other feature mentioned with respect to the method of the second aspect.

A fifth aspect provides an apparatus, the apparatus having at least one processor and at least one memory having computer-readable code stored thereon which when executed controls the at least one processor to perform a method comprising: training a machine learning model comprising: training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features; and training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising: a prototype layer, caused to determine similarity scores between extracted features and a plurality of trainable prototypes; and a prototypical classifier, caused to receive the similarity scores and output a classification of the input based on the similarity scores.

The fifth aspect may include any other feature mentioned with respect to the method of the second aspect.

A sixth aspect provides an apparatus comprising: means for receiving an input; and means for determining a classification of the input using a machine learning model, the machine learning model comprising a local part and a collaboratively learned part, the means for determining being configured to: determine extracted features of the input using a feature extractor of the collaboratively learned part, the feature extractor being caused to extract features of the input; determine a set of similarity scores using a prototype layer of the local part of the model, the prototype layer being caused to determine similarities between extracted features of the input and a set of trained prototypes of the prototype layer; and determine a classification of the input using a prototypical classifier of the local part of the model, the prototypical classifier being caused determine the classification based on the similarity scores.

A seventh aspect provides a method comprising: receiving an input; and determining a classification of the input using a machine learning model, the machine learning model comprising a local part and a collaboratively learned part, the determining comprising: determining extracted features of the input using a feature extractor of the collaboratively learned part, the feature extractor being caused to extract features of the input; determining a set of similarity scores using a prototype layer of the local part of the model, the prototype layer being caused to determine similarities between extracted features of the input and a set of trained prototypes of the prototype layer; and determining a classification of the input using a prototypical classifier of the local part of the model, the prototypical classifier being caused determine the classification based on the similarity scores.

An eighth aspect provides a computer program comprising a set of instructions which, when executed on an apparatus, is configured to cause the apparatus to carry out a method comprising: receiving an input; and determining a classification of the input using a machine learning model, the machine learning model comprising a local part and a collaboratively learned part, the determining comprising: determining extracted features of the input using a feature extractor of the collaboratively learned part, the feature extractor being caused to extract features of the input; determining a set of similarity scores using a prototype layer of the local part of the model, the prototype layer being caused to determine similarities between extracted features of the input and a set of trained prototypes of the prototype layer; and determining a classification of the input using a prototypical classifier of the local part of the model, the prototypical classifier being caused determine the classification based on the similarity scores.

In some example embodiments, the eighth aspect may include any other feature mentioned with respect to the method of the seventh aspect.

A ninth aspect provides a non-transitory computer-readable medium having stored thereon computer-readable code, which, when executed by at least one processor, causes the at least one processor to perform a method comprising: receiving an input; and determining a classification of the input using a machine learning model, the machine learning model comprising a local part and a collaboratively learned part, the determining comprising: determining extracted features of the input using a feature extractor of the collaboratively learned part, the feature extractor being caused to extract features of the input; determining a set of similarity scores using a prototype layer of the local part of the model, the prototype layer being caused to determine similarities between extracted features of the input and a set of trained prototypes of the prototype layer; and determining a classification of the input using a prototypical classifier of the local part of the model, the prototypical classifier being caused determine the classification based on the similarity scores.

The ninth aspect may include any other feature mentioned with respect to the method of the seventh aspect.

A tenth aspect provides an apparatus, the apparatus having at least one processor and at least one memory having computer-readable code stored thereon which when executed controls the at least one processor to perform a method comprising: receiving an input; and determining a classification of the input using a machine learning model, the machine learning model comprising a local part and a collaboratively learned part, the determining comprising: determining extracted features of the input using a feature extractor of the collaboratively learned part, the feature extractor being caused to extract features of the input; determining a set of similarity scores using a prototype layer of the local part of the model, the prototype layer being caused to determine similarities between extracted features of the input and a set of trained prototypes of the prototype layer; and determining a classification of the input using a prototypical classifier of the local part of the model, the prototypical classifier being caused determine the classification based on the similarity scores.

## Brief Description of the Drawings

Example embodiments will now be described by way of non-limiting example, with reference to the accompanying drawings, in which:

Fig. 1 is a schematic diagram of a communication network in accordance with an example embodiment;
Figs. 2 and 3 are schematic diagrams of example inputs;
Fig. 4 is a schematic diagram of an example model architecture;
Fig. 5 is a message sequence diagram in accordance with examples;
Figs. 6 and 7 are flow diagrams of methods in accordance with examples;
Fig. 8 is a block diagram of components of a system in accordance with an example embodiment; and
Fig. 9 shows an example of tangible media for storing computer-readable code which when run by a computer may perform methods according to example embodiments described above.

## Detailed Description

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in any combination of wired and/or wireless communication protocols and/or networks, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM). Embodiments may be implemented in wired networks, such as wired local area networks (LAN), wide area networks (WAN), the internet, etc. Embodiments may be implemented using wired communication protocols or technologies, such as ethernet technologies.

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

The term "terminal device" refers to any end device that may be capable of wired and/or wireless communication. By way of example, a terminal device may be referred to as a communication device, user equipment (UE), a Subscriber Station (SS), or a Mobile Station (MS). The terminal device may comprise a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wired or wireless networks, and the like or any combination thereof.

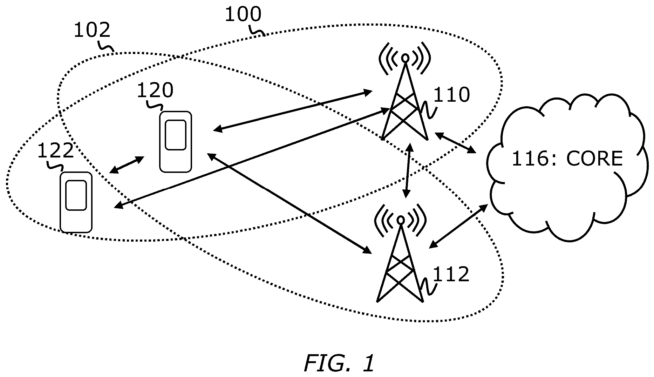

Fig. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. The cell 102 may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node.

There may be a plurality of UEs 120, 122 in the system. They may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

The network nodes 110 and 112 may be further connected via another interface to a core network 116 of the communication network.

It is envisioned that AI/ML will enable real-time analysis as well as automated operation and control in 5G and beyond RAN. This requires the availability of data streamed from wireless devices in a timely manner, especially in extremely time-critical applications such as real-time video monitoring and extended reality (XR). This may be reflected in network architecture, such as by placing and moving ML agents to the required locations in the network, for example for data collection. User devices (mobile devices) may assist network in decision-making in resource management, thus a user device may act as an infrastructure resource.

As the network evolves to programmable and flexible cloud native implementation, AI/MLbased network automation will be used to simplify network management and optimization. It is expected that parts of the air interface, in particular signal processing algorithms, are supported and eventually even replaced with machine learning models. Thus, a 6G wireless communication standard will natively support an AI-based air interface.

Aspects described herein relating to communication and/or networking may be embodied by wired and/or wireless communication apparatuses or methods. Transmitting, sending, and/or receiving steps may therefore utilise radio access technologies, such as the above-described technologies, and/or wired networking technologies. "Wired" networking technologies may encompass technologies that enable the transmission of data over physical lines. This may include networking over electrical conductor, or over an optical line.

*Federated learning*

Federated Learning (FL) facilitates the collaborative training of a global model while maintaining data privacy. However, data heterogeneity, caused by the non-independent and identically distributed (IID) nature of data across clients, poses a significant challenge for its practical application. Clients often have different data distributions due to variations in user behaviours, demographics, and environments, leading to a global model that may not adequately address the specific needs of individual clients.

Personalized FL addresses the challenge of data heterogeneity by adapting the global model to a client's unique data distribution, allowing for customized models that perform better locally. However, balancing the personalization of local models with the need for global collaboration remains a challenge, as extreme personalization can reduce the benefits of shared knowledge from other clients.

We discuss below aspects related to personalized federated learning using prototypical layer integration. This may strike a balance between generalization and personalization.

Generalization may relate to the performance of the model on new clients (which may have datasets that are not IID with existing clients), or on data at an existing client that does not follow the distribution of the data at that client (e.g., in the case of outliers or a shift in the data being collected at a client).

Personalization may relate to the performance of the model on the data of a client or a subset of clients participating in the FL (i.e. how well the global model is adapted to the data encountered at a local client, which may not encounter the same distribution of data as the global average).

By leveraging conceptual prototypes to capture deeper class characteristics, aspects of the present disclosure enable personalized models that benefit from global knowledge sharing, ultimately boosting both local and global performance in heterogeneous federated learning environments.

In some example approaches to personalization in FL prototype-based methods are used, in which, instead of sharing full model parameters, clients send only the means of class representations, or a combination of mean representations and corresponding mean soft predictions for their local data. While these methods aim to enhance local accuracy, they may struggle to achieve strong global performance and contribute little to improving the global model, thereby undermining the broader objective of federated learning. These are referred to herein as *statistical prototype-based* approaches, where prototypes are computed as the mean of class feature representations. Statistical prototypes represent a class's central tendency or average feature vector but lack deep interpretability.

Aspects disclosed herein therefore address a key challenge in federated learning: the issue of data heterogeneity. Clients often have diverse and non-identically distributed data. This variability leads to a global model that struggles to perform well for all clients since it fails to adapt to a client's unique data distribution.

Personalized FL methods, try to adapt the global model to local data. However, they often prioritize individual client performance at the expense of the global model, weakening the collaborative advantage of FL. Prototype-based approaches (e.g., statistical prototype-based approaches), which share simplified representations of data, often lack the depth needed to enhance both local and global performance effectively.

Aspects disclosed herein integrate conceptual prototypes into the FL process. Unlike methods that use statistical averages, conceptual prototypes may be explicitly learned (e.g., may be represented by an explicit set of trainable parameters) and represent key, interpretable features of the data (e.g., of "patches" of the input data). This allows for more accurate and meaningful personalization without compromising the global model's effectiveness.

Approaches to personalized federated learning disclosed herein use prototype learning via conceptual prototypes. Under the conceptual prototypes approach, prototypes are explicitly learned (e.g., the prototypes may have or be defined by respective sets of trainable parameters) to represent distinct and interpretable features or concepts associated with a class. These prototypes capture important semantic elements and provide meaningful insights for classification beyond just the average.

Aspects disclosed herein are applicable to three key aspects in FL:

(1) Generalization (e.g., by creating a feature extractor applicable to both existing and new clients;
(2) Personalization (e.g., through updates based on clients' local data); and
(3) Privacy (e.g., by retaining prototypes locally, without sharing them, and using privacy-preserving techniques for shared components).

*The Conceptual Prototypes Approach*

Prototype-based classification is based on the idea that the features extracted from test data can be associated with similar features learned from samples in the training set. A Feature Extractor f: $R^{W^x \times H^x \times C} \to R^{W^z \times H^z \times D}$ is a model that maps input *x* into a latent representation *z*. The assumption is that the input *x* can be divided into smaller patches, with the patches capturing localized information from respective parts of the input data. The patches may be non-overlapping. Hence, a Latent Patch $z_i \in R^D$ represents the extracted features of the corresponding patch of the input data. The latent patch aims to encode the features of a specific input patch, and the set of all latent patch vectors $f(x) = \{z_i\}_{i=1}^{W^z \times H^z}$ may represent the entire input in the latent space. The feature extractor may be embodied by a convolutional neural network.

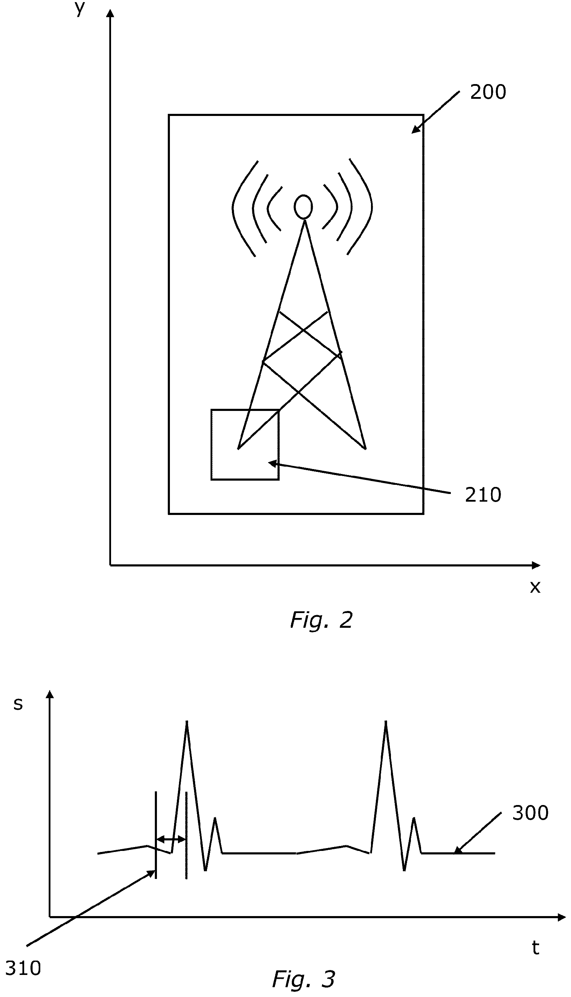

Fig. 2 is a schematic diagram of example input 200. Input 200 is two-dimensional input data (e.g. image data). Patches of input 200 may be defined (e.g. according to a predefined or trained rule - such as a preset or trained area or size for a patch) to produce patches such as patch 210. Patch 210 may capture particular features of the input data, which may be reflected in the corresponding vector (or feature vector) of the corresponding latent patch. For example, in the case of patch 210, features extracted from a "foot" portion of a schematic image of a base station may be reflected in the corresponding feature vector.

Fig. 3 is a schematic diagram of signal s of example input 300 plotted against time. Example input 300 is an example of time-series input data (e.g., sensor data). Patches of input 300 may be defined, e.g., according to a predefined or trained rule - such as a preset or trained fixed time interval for a patch. Patch 310 may capture particular features of the input sensor data.

In the case of time-series medical sensor data, such as electrocardiogram (ECG) or photoplethysmogram (PPG) data, different portions of the data may vary depending on the condition of a patient. For example, different portions of an ECG may conform to or deviate from healthy examples in different ways and to different extents, and aspects of the condition of a patient may be inferred from this. A latent patch corresponding to one of these features may therefore correspond to meaningful (and interpretable) features (such as features indicative of the physiological condition of a patient).

In the case of audio data, latent patches may contain features corresponding to different sources of audio (e.g. distinct birdcalls may be present at different times, or elements of a sound environment may be indicative of the normal or abnormal functioning of a machine or its components).

The input may comprise time-series image data (e.g., video data), and the latent patch may correspond to a defined space-time region of the input data. Additionally, or alternatively, the input may comprise multiple images and/or time-series data sources. For example, the combination of multiple sensor readings, such as the readings from multiple leads of an ECG, or a combination of ECG and PPG data, may serve as input data.

When the feature extractor f is trained, input patches of samples in the training set can be associated to learned prototypes (e.g., by associating feature vectors output by the feature extractor and associated with the input patches with learned prototypes). For example, an input patch of the sample can be associated with learned prototypes of a set of learned prototypes. A prototype $p_j \in R^D$ can be learned from latent patch $z\_i$ obtained from samples in the training set. Prototypes may be represented by a prototype vector (e.g., which may be compared with a feature vector). Prototypes may be represented as a ball in latent space, which may encompass various learned prototypes from the training set. A Prototypical Ball $p_j = B(c_j, r_j)$ is a ball in the latent space, centered at $c_j \in R^D$ with a radius $r_j \in R^+$. The prototypical ball may define a fixed region around the prototype centre $c_j$, considering all latent patches within this region to have equal similarity. The prototypical ball may in some examples be defined by a (trainable) vector in latent space (e.g., a prototype vector in latent space), and a (trainable) radius in latent space. Feature vectors within the ball defined by the centre and radius in latent space may be considered to have equal similarity.

In some examples, feature extractor f may comprise convolutional layers. An input image having $W^x$ pixels in one dimension, $H^x$ pixels in another dimension, and having $c$ channels (such as colour channels) may be processed by a feature extractor (using at least one convolutional layer) into a representation having $W^z \times H^z$ patches, with the patches having D channels. A patch may therefore be represented by a $D$ dimensional vector in latent space.

A new feature extractor may be designed to obtain the patches from an input, or existing architectures, such as ResNet (e.g. ResNet 18), DenseNet, VGG, etc. may be adapted to provide the feature extractor. For example, the output of a layer of a convolutional network with a desired size (e.g., number of patches) and depth may be selected as the output of the feature extractor. For example, in some examples the layers from the first layer to the penultimate layer of a ResNet model may be considered to form a feature extractor, while the final layer may be considered a classifier that receives the extracted features and determines a classification.

The prototypical ball represents a more generalized concept of a class of input data and allows for capturing diverse features without needing exact matches with training set (e.g., without giving undue weight to an exact match, or a lack of an exact match with the prototype centre).

A Prototype Layer $g: R^{W \times H^z \times D} \to R^M$ is a model that is parameterized by M trainable prototypes. For example, these may be prototypical balls $\{p_i\}_{i=1}^M$. The prototype layer maps the latent representation z into M similarity scores. The outputs of prototype layer, i.e., the similarity of a latent patch $z_j$ with a prototypical ball $p_i$, may be shown as $g_{p_i}$. These similarity scores may be computed by log-based similarity, cosine similarity, or any other suitable method of calculating a similarity between vectors. The maximum similarity may be bounded to ensure that all vectors within the prototypical ball have the same similarity score. In some examples, a prototype is compared with a plurality of latent patches, and a respective similarity score for the prototype is based on the most similar latent patch to the prototype.

A Prototypical Classifier $h: R^M \to R^C$ is a model that takes as input the similarity scores generated by the prototype layer. The outputs of $h$ may be referred to as evidence logits because, semantically, an output $h$ represents evidence that the input $x$ belongs to class $c$ by comparing its latent patch with every learned prototypical ball of class $c$. The classifier may be parameterized by $C$ class-assignment weights, where $C$ is the number of classes in the training set.

Prototype-based classification may be achieved by combining the three models described above, i.e., $y = h \circ g \circ f (x)$. An advantage of the prototype-based classification over conventional deep learning methods is that it provides interpretable prototypes that give insight into the reasoning behind the final classification.

For example, in the context of prototype-based classicisation of time series medical data, a medical professional may be provided with a classification of input data output by the model. The medical professional may be interested in determining how the classification was arrived at, so the model may also output the prototypical balls that the model determined that the input data is similar to, or with example (e.g., training) data corresponding to those prototypical balls. The medical professional may determine from the example data that the prototypical balls represent certain features (such as particular kinds of deviation from the norm in portions of an ECG, PPG, etc.) and infer the "reasoning" of the model in arriving at the classification (e.g., the professional may infer that a particular patient condition was determined based on a particular combination of identified features). This may enhance trust in the model, provide insight into patterns in the input data, and/or allow monitoring of the accuracy and/or reliability of the model.

Prototypes may be used in enhancing interpretability and explainability in centralised settings. Prototypes may also be applied to personalisation in FL models (personalisation may be less relevant in a centralised setting, without separate clients to personalise to).

However, in some FL implementations, *f, g,* and *h* would need to be distributed among various clients for training and subsequent aggregation. Distributing all of these may result in unacceptable privacy concerns, as the interpretability of prototypes may reveal sensitive information to other clients, such as the presence of certain features in a training set.

*Model architecture*

Aspects of this disclosure relate to prototype-based learning in an FL context.

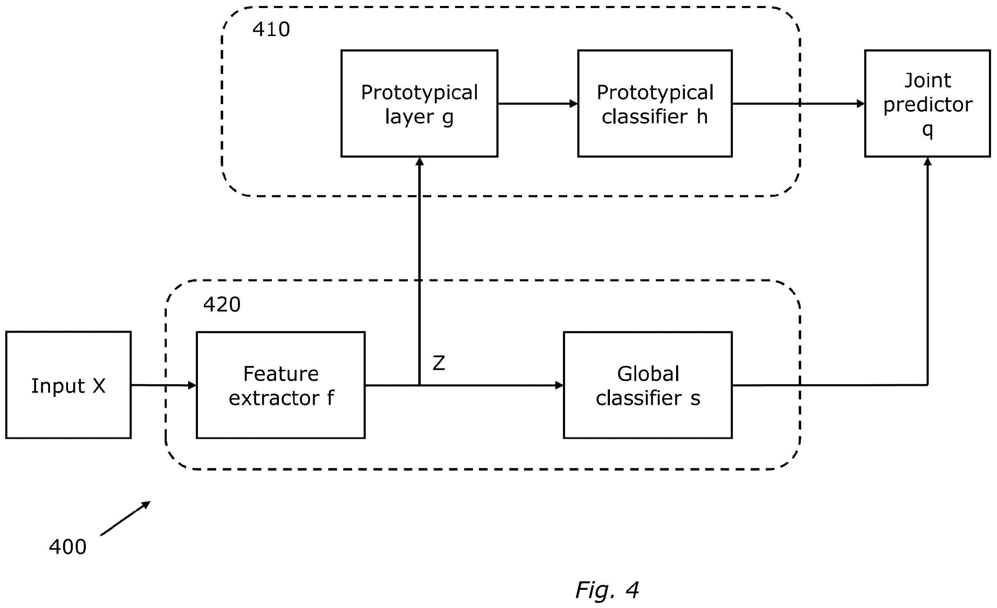

Fig. 4 is a schematic diagram of an architecture of model 400. Model 400 comprises private/local portion, a local model 410 and collaborative portion, a global model 420.

Model 400 integrates prototype-based classification into FL. Model 400 comprises a model 420 trained collaboratively in FL (or a "global" model), represented as $s \circ f(x)$. As discussed above, f outputs latent representation Z, comprising feature vectors corresponding to latent patches of the input, while s generates a classification (or evidence logits) based on an input latent representation.

The global model (e.g., classifier s of the global model) does not necessarily use the conceptual prototypes approach. Rather, alternative approaches may be more suitable for protecting privacy or efficient federated learning.

In some examples, feature extractor f may comprise one or more convolutional layers, while s may comprise one or more pooling layers, one or more fully connected layers, etc. For example, feature extractor f may comprise a first portion of the layers of the ResNet-18 architecture, configured receive an input image and to output $W^z \times H^z$ patches, with the patches having D channels, and clasisifier s comprises a second portion of the layers of the ResNet-18 architecture, configured to receive the $W^z \times H^z$ patches with $D$ channels, and output a classification. For example, a set of layers of the ResNet-18 architecture that receives an input image and generates a 7 x 7 output with D channels may be used as the feature extractor, and the remaining layers may be used as the classifier. In some examples, the layers from the first layer to the penultimate layer of the ResNet-18 architecture can be used as a feature extractor, and the final later can be used as the global classifier.

This global model is extended/complemented by incorporating two additional components, *g* and *h,* which remain private on the client side. g and h apply a prototype approach, such as the conceptual prototype approach using prototypical balls as discussed above, using the feature extractor f of the global model to generate the latent representation.

To utilize both local and global knowledge, the outputs of *h* and *s* may be merged to construct a joint predictor *q* that performs the final classification. During FL rounds, clients may train all components iteratively, but only share *f* and *s* with the server.

When training model 400, the global model 420 (i.e., comprising the shared feature extractor f and classifier head s) is collaboratively trained across multiple clients (e.g., based on data sets local to the respective clients). The global classifier may use a neural network to perform classification. Additionally, or alternatively, logistic regression, Support Vector Machines, decision trees, and/or gradient boosting may be used.

The local model 410, (in particular prototypical layer g and prototypical classifier h of the local model), is trained locally to maintain local data characteristics for personalisation. The training process may be structured in several key phases, comprising an initial warm-up phase for the prototype-based model and alternating local training passes during the federated learning rounds.

By aggregating f across a plurality of clients, the feature extractor is generalised and may be applicable to both existing and new clients. The use of global classifier s and the joint predictor may further enhance generalisability, by providing a classification using a model s based on multiple data sets (i.e., from multiple clients) for joint prediction with the output of the local classifier.

By updating the components g and h based on a client's local data, this provides for a classification route that is personalized to the client's specific data distribution and characteristics.

By updating the prototypes (e.g., in components g and h) based on local data, it is not necessary to share the prototypes with other clients. This allows the personalisation and interpretability advantages of the conceptual prototypes approach to be retained without compromising privacy by sharing the prototypes. Components f and s may benefit from techniques in privacy-preserving FL (e.g., the classifier s may not use the conceptual prototypes approach), which may be used in parallel with model 400. Any one or more of the following privacy-preserving techniques may be used, such as Differential Privacy, Secure Multiparty Computation, Homomorphic Encryption, Federated Averaging with Model, Compression, and Split Learning.

*Training*

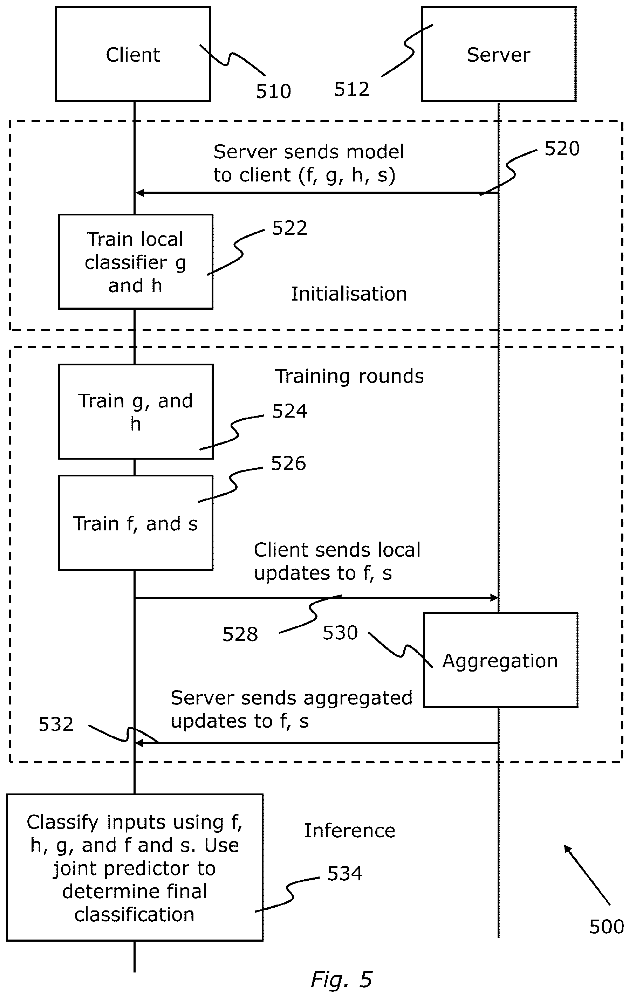

Fig. 5 is a message sequence diagram showing an example method designated generally by the reference numeral 500. In training process 500, a client 510 Training process 500 starts at step 520, at which server 512 initializes the models *f,s,g, and h,* and distributes them among clients, including client 510.

In some examples, g and h may be initialised without using knowledge of f and s. For example, the parameters of g and h may be initialised with random or predefined values. In some examples, g and h may be initialised based on knowledge from f and s.

For example, g and h could be initialised using pretrained parameters from f and s. Clients could initialize g and h based on the representations learned by f and s. For instance, the client might apply f's learned feature representations to derive relevant local prototypes and then initialize g and h with these representations, adjusting them during local training.

In some examples, layer adaptation or transformation may be used to initialise values of g and h. Clients could initialize g by applying transformations to the output space of f (e.g., dimensionality reduction or clustering) to identify meaningful prototype centres. Similarly, h could inherit initial weights from s to maintain compatibility between global and local classification decisions, fine-tuning based on local data distribution.

In some examples, local layer fine-tuning may be used in initialising values of g and h. After receiving f and s from the global model, clients can initialize g and h with the same architecture or a simplified variant and fine-tune them locally. This allows each client to adapt to its specific data distribution while still leveraging the shared knowledge encapsulated in f and s.

At step 522, client 510 first freezes *f,* and trains *g* and *h* to "*warm-up*" the connections between f and g. This "warm-up" process may take place over one or a plurality of training steps, performed using the local data set.

At steps 526 and 524, after the warm-up, client 510 alternates between (i) training f and s and (ii) training *g and h,* both on the local dataset. Either of step 526 (training f and s) and step 524 (training g, and h) may take place first, and steps 524 and 526 may alternate once, or a plurality of times. In some examples, when training f and s, for a batch of *N* samples, training comprises minimizing (by updating trainable parameters of the models, using any suitable iterative method, such as stochastic gradient descent) the cross-entropy loss

$$\mathcal{L}_{g} = -\frac{1}{N} \sum_{i=1}^{N} \sum_{c=1}^{C} y_{i,c} \log \widehat{y_{i,c}},$$

where $y_{i,c}$ is the label (0 or 1) for sample *x_i* for class *c*, and $\widehat{y_{i,c}}$ is the softmax output for class *c* predicted by *s*.

When the shared models (*f and s*) are trained by $\mathcal{L}_{g}$ in step 526, s (or *f and s*) may be kept frozen during step 524.

For the private models (*g and h*) a multi-objective loss may be used to ensure that the learned prototypical balls are representative, distinct, and properly aligned with their respective classes:

$$\mathcal{L}_{\ell} = \alpha \mathcal{L}_{CE\_mix} + \beta \mathcal{L}_{orth} + \gamma \mathcal{L}_{clst} + \delta \mathcal{L}_{sep} + \epsilon \mathcal{L}_{L1} + \zeta \mathcal{L}_{rad},$$

where $\alpha, \beta, \gamma, \delta, \epsilon, \zeta$ are hyperparameters controlling the contribution of a respective objective to the multi-objective loss $\mathcal{L}_{\ell}$, and can be fine-tuned through cross-validation.

The *cross-entropy loss with mixup* $\mathcal{L}_{CE\_mix}$ measures the discrepancy between the predicted labels and a combination of true and predicted labels, encouraging generalization, where $\widehat{y_{i,c}}$ is the softmax output for class *c* predicted by *h*, and $\lambda$ controls the mixup.

$$\mathcal{L}_{CE\_mix} = -\sum_{c=1}^{C} [\lambda y_{i,c} + (1 - \lambda)\widehat{y_{i,c}}] \log(\widehat{y_{i,c}})$$

The *orthogonal loss* $\mathcal{L}_{orth}$ ensures that different prototypical balls learn distinct features by encouraging their center to be orthogonal.

$$\mathcal{L}_{orth} = \sum_{i \neq j} \left| c_i^\top c_j \right|$$

The *clustering loss* $\mathcal{L}_{clst}$ pulls prototype centres closer to the examples of their respective classes, ensuring they represent meaningful features.

$$\mathcal{L}_{clst} = \sum_{i=1}^{N} \min_{j \in \text{class}(i)} \left| f(x_i) - c_j \right|^2$$

The *separation loss* $\mathcal{L}_{sep}$ pushes prototype centers away from examples of other classes, so they do not overlap with other class features.

$$\mathcal{L}_{sep} = \sum_{i=1}^{N} \sum_{j \notin \text{class}(i)} \exp\left( -\left| f(x_i) - c_j \right|^2 \right)$$

*L1 regularization* $\mathcal{L}_{\mathcal{L}1}$ promotes sparsity in the model's parameters, excluding weights associated with the correct class to avoid penalizing accurate predictions.

$$\mathcal{L}_{\mathcal{L}1} = \sum_{w \notin \text{correct class}} |w|$$

Minimizing $\mathcal{L}_{rad}$ encourages the prototype balls to remain compact, allowing the learned concepts to capture more specific semantic features crucial for accurate classification.

$$\mathcal{L}_{rad} = \sum_{p_j \in P} r_j^2$$

The private models g and h, may be trained in step 524 (e.g., keeping the feature extractor f frozen). In other examples, the shared feature extractor and the private models, f, g, and h, may be trained in step 524. When the shared models (*g and h*) are trained by $\mathcal{L}_\ell$ in step 524, *h* (or *g and h*) may be kept frozen during step 526.

*Distillation process*

In some examples, to include the knowledge of the global model 420 in the local model 410, knowledge distillation (KD) may be used. However, this distillation is selective and applied if either of the following conditions is satisfied:

1) The global model is correct, but the local model is incorrect:

$$I\left( \arg\max q_g(x) = \hat{y} \quad \text{and} \quad \arg\max q_l(x) \neq \hat{y} \right)$$

2) Both models are correct, but the global one has higher confidence:

$$I\left( \arg\max q_g(x) = \hat{y} \quad \text{and} \quad \arg\max q_l(x) = \hat{y} \quad \text{and} \quad \text{conf}_g(x) > \text{conf}_l(x) \right)$$

For samples that satisfy either of these conditions, the local branch's probabilities (e.g., output by h) can be replaced with the global branch's probabilities $q_l(x) \leftarrow q_g(x)$ (e.g., output by s).

A *distillation loss* may be computed using the Kullback-Leibler (KL) divergence between the adjusted local probabilities $q_l(x)$ and the global probabilities $q_g(x)$:

$$\mathcal{L}_{distill} = \frac{1}{|\mathcal{B}|} \sum_{x \in \mathcal{B}} \mathsf{KL}\Big(q_g(x) \parallel q_l(x)\Big),$$

where B is a batch of samples satisfying one of the conditions. This loss encourages the local model to mimic the output distribution of the global branch for the selected samples, helping the local model to improve its performance by learning from the global model's stronger or more confident predictions. This distillation loss may be included as an additional term in the multi-objective loss, when the conditions are satisfied.

*Federated Aggregation*

At step 528, after local training, client 510 sends locally determined updates to global models f, s to server 512. At step 530, server 512 aggregates the updates from a plurality of clients. For example, server 512 may determine the average of the weight updates received from the respective clients. The relative contribution of the weight updates from a client to the average may be weighted based on the number of samples at that client (i.e., performing the aggregation may comprise calculating a weighted average). In an example, the weight updates may be determined as follows:

$$w_g = \frac{1}{n} \sum_{k=1}^{K} n_k \times \mathcal{L}_{CE_k}(D_{lk})$$

Where K is the number of clients, $n_k$ is the number of data samples on client $k$, and $n = \sum_{k=1}^{K} n_k$ is the total number of samples across all clients. $\mathcal{L}_{CE_k}(D_{lk})$ is the cross-entropy loss associated with a client's local data set $D_{lk}$.

After aggregation, the server determined weight updates are sent to client 510 at step 532, and client 510 uses the updated weights in models f and s.

The training and aggregation steps 524 - 532 may occur once, or steps 524 - 532 may repeat until some condition is met (e.g., convergence of the global models). The training and aggregation process may repeat at a time a new client joins as a participant of FL (to take advantage of the client's local data in improving the global models). The training and aggregation process may repeat when a participating client 510 acquires new training data (e.g. to take advantage of the new data to train a new classifier h).

In some examples, steps 528 - 532 may be omitted. For example, if it is determined that the overall model or classifier h specifically has achieved sufficient accuracy (e.g., on the local data set), steps 528 - 532 may be omitted from (at least some) subsequent training rounds.

In some examples, steps 528 - 532 may be omitted from all training rounds. In some examples, client 510 may benefit from federated training of models f and s by other clients (e.g., performed before step 520), without providing locally determined updates to these models to the server for aggregation.

*Inference*

During inference, once the model is trained, the classifier h may be used to classify inputs at step 534.

Alternatively, during the inference, the input may be fed into both classifiers s and h, and the final prediction may be given by the *joint predictor q*.

The joint predictor leverages the outputs of the global 420 and local models 410. The joint prediction $\widehat{y_{joint}}$ is calculated by averaging the outputs of the global classifier and the local prototype-based branch:

$$\widehat{y_{joint}} = \mathsf{avg}\big(\widehat{y_g}, \widehat{y_l}\big)$$

Where $\widehat{y_g}$ is the predicted probability distribution from the global classifier s, and $\widehat{y_l}$ is the predicted probability distribution from the local model h. This averaging combines the strengths of both models to produce the final prediction.

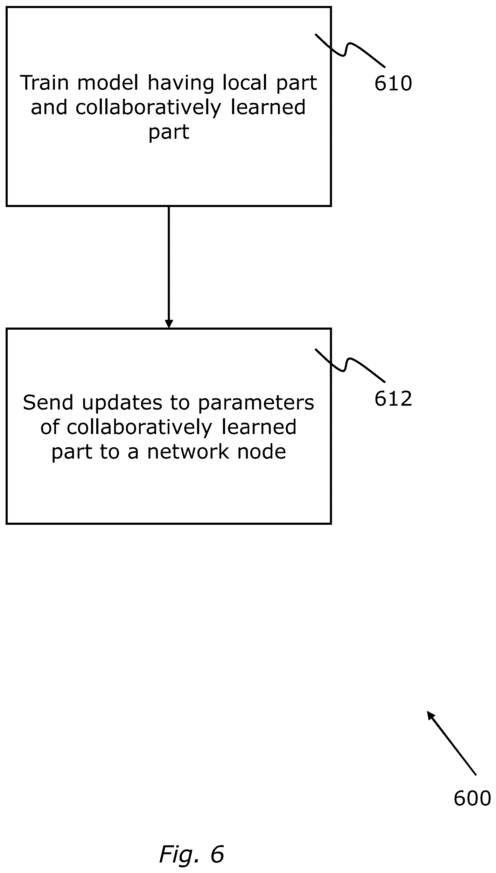

Fig. 6 is a flow diagram of a method in accordance with example embodiments, designated generally by reference numeral 600.

At step 610, a machine learning model is trained (for example, by an apparatus or client device). The machine learning model comprises a collaboratively learned part parameterised by a first set of parameters, and a local part comprising a second set of trainable parameters.

The collaboratively learned part comprises a feature extractor configured to extract features from inputs (such as image data, time-series data, etc.). Using a collaboratively learned feature extractor may provide the model with improved generalisability and may allow new clients to accelerate the initial training process by using the work of existing clients. The extracted features may be extracted as vectors, and the vectors may correspond to a respective portion, patch, or region of a plurality of regions of the input. Extracting the features as vectors corresponding to portions or patches of the input may allow for a comparison with trainable prototypes. Feature vectors may be representative of features of data from respective defined regions of the plurality of defined regions of the input. Training the machine learning model comprises training the collaboratively learned part to obtain local updates to the first set of trainable parameters.

The local part comprises a local classifier, configured to receive the extracted features and output a classification of the input. The local classifier comprises a prototype layer, configured to determine similarity scores between extracted features and a plurality of trainable prototypes. The use of trainable prototypes may enhance interpretability (as the prototypes may be interpreted based on training data corresponding to the prototypes). The use of trainable prototypes may also enhance personalisation, as the trainable prototypes may represent features of the local client data once trained. For example, for a set of trainable prototypes and feature vectors, the local classifier may determine a similarity score for a combination of feature vector and trainable prototype. The similarity scores may therefore convey which features (corresponding to a trainable prototype) are present in a patch of the input data. The trainable prototypes may comprise trainable vectors in the same vector space as the feature vectors. The similarity scores may comprise or be based on a log-based similarity or cosine similarity. The trainable prototypes may also comprise trainable radii, to define prototypical balls. The similarity score may be the same for all feature vectors within the trainable radius of the vector of a trainable prototype (for example, the log-based or cosine similarity score may have an upper bound, so that all vectors within the trainable radius have the same similarity). The use of prototypical balls may avoid undue weight being attached to having an exact match with a prototype, allowing the prototypes to reflect a broader class of features. Training the machine learning model comprises training the local part to obtain local updates to the second set of trainable parameters. In some examples, respective prototypes have a respective similarity score, based on the similarity between the prototype and the most similar latent patch.

The local classifier comprises a prototypical classifier, configured to receive the similarity scores and output a classification of the input. The prototypical classifier may comprise one or more fully connected layers. In some examples a fully connected layer of the prototypical classifier outputs evidence logits associated with respective classes. The prototypical classifier may comprise a layer configured to generate probabilities or confidence scores associated with respective classes and based on the logits.

At step 612, the local updates to the first set of trainable parameters are sent to a device. For example, this may be a server managing the collaborative learning, or another client device (e.g., in the case of decentralised collaborative learning). By sending the local updates, or indications of the local updates to the trainable parameters of the collaborative part of the model to a device, these may be aggregated, so that a global update may be shared with multiple participating clients.

In some examples, the inputs to the model may comprise image date. In some examples the image data is medical image data.

In some examples, the inputs comprise time-series data. The time-series data may comprise sensor data. The sensor data may comprise electrocardiogram (ECG), photoplethysmogram (PPG), or inertial measurement unit (IMU) data.

In some examples the collaboratively learned part of the machine learning model further comprises a collaboratively learned classifier. The collaboratively learned classifier may be configured to receive a representation of input data from the feature extractor and output a classification of the input data. The machine learning model may further comprise a joint predictor configured to determine a classification based on classifications output by the local and collaboratively learned classifiers. Using a global classifier and joint predictor may provide better performance and generalisability. Using a global classifier, which may be trained based on a larger data set than the local classifier, may improve performance generally, and in particular may improve generalisability (e.g., because the global classifier may have better performance on data that does not follow the local distribution on which the local classifier was trained).

In some examples, training the machine learning model comprises alternating between training the local classifier, and training the feature extractor and collaboratively learned classifier on a first dataset. In some examples, training the machine learning model comprises alternating between training the feature extractor and local classifier, and training the feature extractor and collaboratively learned classifier on a first dataset.

In some examples the classification comprises a probability distribution, the probability distribution comprising a plurality of probabilities, wherein probabilities of the plurality indicate probabilities of an input corresponding to respective classes of a set of classes. This may provide more information regarding the confidence of the classification than an indication of class alone.

In some examples, training the machine learning model comprises, in at least an initial round of training, training the first set of trainable parameters without training the second set of trainable parameters. As the second set of trainable parameters are collaboratively learned, while the first set of trainable parameters are trained locally, the second set of trainable parameters may be "frozen" to retain the collaboratively trained parameters while the first set of trainable parameters "warm up" to establish connections with the second set.

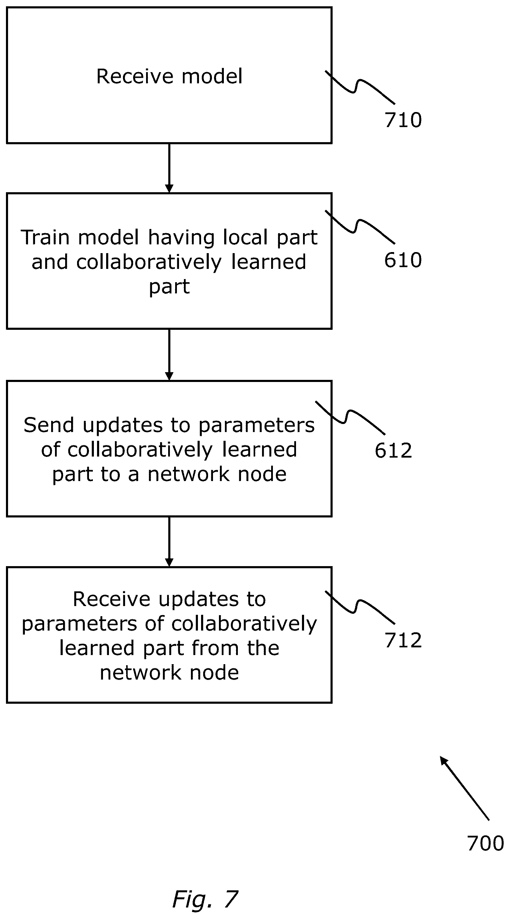

Fig. 7 is a flow diagram of a method in accordance with example embodiments, designated generally by reference numeral 700.

Method 700 comprises steps 610 and 612 of method 600.

At step 710 of method 700, the machine learning model is received from a device. This may also be a device that receives parameter updates. The received machine learning model (or the parameters of the local portions of the machine learning model in particular) may comprise placeholder parameters, or uninitialized parameters that are to be initialised at the apparatus performing the training. The collaboratively learned portions of the received machine learning model may comprise parameters that have been trained (e.g. collaboratively, by other apparatuses/client devices, if such parameters are available).

Steps 610 and 612 follow, using the received machine learning model.

At step 712, of the method, updates to the second set of trainable parameters (or indications of these updates) are received from a device. For example, if the device to which local updates were sent is a server performing aggregation of the results of training rounds in federated learning, the updates to the second set of trainable parameters may be received from this device.

The model may be updated to use the second set of trainable parameters as received from or indicated by the device. In contrast, the model may use locally updated parameters of the first set of trainable parameters.

In some examples the trained model may be used in inferencing.

Inferencing may comprise receiving (e.g., at a client device) an input. The input data used in inferencing may have a similar form to input data used in training. For example, the model may be trained using image data (such as medical image data), and the input during inferencing may also be image data (such as medical image data). The input data during inferencing may be from the same or a similar source to input data during training data. For example, the training data may be data from an electrocardiogram, ECG, and the input data may also be data from an ECG.

During inferencing, the trained model is used to classify the input. For example, the trained model may output a label or set of labels classifying the input, such as the labels with the highest associated confidence, or by outputting a label and an associated confidence value, or by outputting a set of labels and confidence values.

Classifying the input may comprise determining extracted features of the input using the collaboratively trained feature extractor, determining similarity scores between extracted features and prototypes using the local prototype layer, and determining a classification of the input using the local prototypical classifier.

The classification determined by the local prototypical classifier may in some examples be output by the model. In some examples, classifying the input may further comprise using a collaboratively trained classifier to determine a classification of the input, and using a joint predictor to determine a classification from the classifications output by local prototypical classifier and collaboratively trained classifier.

The feature extractor may extract features corresponding to patches of an input, and the extracted features may take the form of feature vectors. For example, a particular feature vector may correspond to a particular texture, pattern, edge, etc., or a combination thereof in patch of an image.

The prototype layer may compare feature vectors with prototypes. The prototypes may be vectors or balls in the same vector space as the feature vectors, and the similarity scores may be calculated using a suitable measure of similarity between vectors, such as cosine similarity. In some examples the prototypes are "balls" having a radius (about a centre, which may be defined by a vector). In this case the similarity scores of all vectors lying within the radius of the centre may be the same, for example, by limiting similarity scores so that the similarity score of a vector within a prototypical ball does not exceed the similarity score of a vector on the boundary of the prototypical ball. In some examples, similarity scores are determined for pairs of prototypes and feature vectors, so if the prototype layer comprises M prototypes, and Z features are extracted from Z patches of the input, M x Z similarity scores, or up to M x Z similarity scores may be determined.

The classification may comprise a probability distribution, or confidence scores, indicating a confidence that a classification applies to the input. For example, a high confidence or probability that one classification or label is applicable to an input may indicate that the classification or label likely applies to the input, while a low confidence or probability may indicate that the classification or label likely does not apply to the input.

*Example applications*

Aspects of this disclosure may be applied, for example, to medical image analysis. An application of the above discussed aspects to the classification of moles is discussed below.

A client, such as a client device at a medical provider, may have a dataset of classified mole images (e.g., images of moles classified as cancerous, non-cancerous, etc.). This dataset may comprise images from patients that have been classified by medical professionals.

There may be an interest in training a model to classify mole images. Using federated learning, a number of client devices (e.g., client devices of a number of medical providers) could train a global model, the client devices using their own classified mole images to update the global model. However, the data encountered by different client devices may not be independent and identically distributed. For example, the patients of different medical providers may have different average exposure to sunlight (e.g., based on latitude), which may give rise to different conditions with different frequency. There may therefore be an interest in personalisation, to address the non-IID nature of the data across different client devices. Additionally, a medical provider's data may be sensitive, so there may be an interest in preserving privacy.

Applying the methods described above to this scenario, the client may participate in federated learning with other clients and train a classifier (as describe above). In the federated learning, a feature extractor and global classifier may be collaboratively trained.

The conceptual prototypes approach may be applied, and the prototypical layer (e.g. comprising trainable prototypes, such as prototypical balls) and a prototypical classifier may be trained on the local data. The prototypical balls are associated with features of latent patches. Patches of the training data that correspond to latent patches with feature vectors lying within these prototypical balls may be associated with the prototypical balls, to assist with interpretability.

Once trained, the classifier may classify mole images (e.g., as containing a cancerous or non-cancerous mole).

In some cases, it may be immediately obvious to a medical professional that a particular image has been correctly classified as containing a cancerous or non-cancerous mole. However, there may be an interest in inferring the "reasoning" behind the classification, particularly if the classification is incorrect, or if it is not immediately clear that the classification is correct. For example, inferring the reasoning of the model may assist in quickly distinguishing a false result from a correct result that is arrived at based on features that are not immediately apparent. Inferring the reasoning may also allow for aspects of the model or training data that give rise to a false result to be investigated, so that the training data or model can be updated accordingly.

Training data samples may correspond to a prototypical ball (for example, patches of training data may correspond to a latent patch having feature vectors that lie within the prototypical ball). The features of those training data sample that the ball represents can be inferred (e.g., if all of the samples corresponding to a particular ball comprise the same pattern or texture, then the ball may be representative of that pattern or texture feature). A medical professional may then infer from the similarity scores and prototypical balls that a particular combination of features, such as textures or patterns, gave rise to the classification. The medical professional may then determine whether the inferred "reasoning" of the model is sound, and agree or disagree with the classification, accordingly.

This conceptual prototypes based approach, based on the local data, may provide good performance on the local dataset, while the collaboratively learned portions of the model, such as the collaboratively learned feature extractor f and global classifier s, may provide a) better performance on data that does not necessarily follow the local distribution on which the client was trained (e.g., because of an outlier or a change in the local distribution) and b) better performance on new clients.

Aspects of this disclosure are applicable in a similar manner to other types of medical data from any medical or physiological sensor. For example, images from specialist medical imaging equipment (e.g., ultrasound, magnetic resonance imaging, MRI, computerized axial tomography, CAT, positron emission tomography, PET, etc.) may be analysed. In the case of three-dimensional imaging equipment, the latent patches may be three dimensional. Similarly, in the case of time series image data (e.g., video), the latent patches may be three dimensional. In other examples, the data may be time series medical sensor data, such as electrocardiogram (ECG), photoplethysmogram (PPG), blood glucose meter, sphygmomanometer, etc. data, with latent patches being time periods.

Further, aspects this disclosure are applicable to any type of sensor data, for example, data from location/positioning sensor, IMU (Inertial measurement unit) sensor, camera sensor, lidar (light detection and ranging) sensor, etc. with latent patches being time periods.

Further, aspects this disclosure are applicable for analysing performance data of any type of electrical component or device, for example, a CPU (central processing unit), a GPU (a graphical processing unit), a memory unit, a transmitter, a receiver, an antenna, a microphone, a loudspeaker, a display, a camera sensor, etc., with latent patches being time periods.

Further, aspects this disclosure are applicable for analysing performance data of any type wireless or wired communication network device or element, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, an aircraft network device, user equipment (UE), a Subscriber Station (SS), a Mobile Station (MS), or an Internet of Things (IoT) device. The user equipment (UE) may comprise a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, playback appliances, vehicle-mounted wireless terminal devices, USB dongles, a watch or other wearable, a head-mounted display (HMD), etc. The Internet of Things (IoT) device may further comprise, a vehicle, a drone, a medical device and applications (e.g., remote surgery), an industrial device and applications (e.g., a robot and/or other wireless devices operating in an industrial and/or an automated processing chain contexts), etc.

Aspects of this disclosure are also applicable to fault detection. For example, image data may be used in corrosion detection, or audio data may be used to detect mechanical faults in machinery. The methods herein may also be applied to wildlife classification (which may also be based on image data or audio data). The occurrence of corrosion and the appearance of wildlife may be climate dependent and may therefore be non-IID.

*Example training data and training hyperparameters*

An example of a training process that may be carried out in accordance with above aspects is described below.

In one example, the methods described herein are applied to the CIFAR-10 training set of labelled 32 x 32 pixel images. The feature extractor uses the convolutional layers according to the ResNet-18 architecture, and the collaboratively learned classifier uses a classifier according to the ResNet-18 architecture (e.g., the classifier may correspond to the last layer of the ResNet-18 architecture, and the feature extractor may correspond to the preceding layers). A pretrained ResNet-18 model (trained on the CIFAR-10 training set) may be used as the starting global model, which may simulate the effect of a new client joining federated learning and obtaining a collaboratively learned model that has already been trained on other data.

In this example, training begins with a 10-epoch local warm-up phase (during which the collaboratively learned feature extractor and global classifier are frozen and the parameters of the local model are trained). The parameters of the local model are initialized with random values, which are then trained.

During each federated round, the global and local models are alternately trained for 1 epoch. Both the feature extractor, classifier, and prototypes are optimized with a learning rate of 0.001, using stochastic gradient descent (SGD) for the former two and adaptive moment estimation (Adam) for the prototypes, with momentum of 0.9 and no weight decay across all optimizers.

The batch size is set to 64 for training. The following weighting schema/hyperparameters are used for the loss function of the local model: $\alpha = 1$, $\beta = 1$, $\gamma = 0.8$, $\delta = -0.08$, $\varepsilon = 10^{-4}$, and $\zeta = 1$. For $\mathcal{L}_{clst}$ the top-k algorithm with k = 10 and radius = 4.5, and for $\mathcal{L}_{distill}$ the confidence score is set to 0.8. A total of 200 prototypes and 10 descriptive units are used to represent the underlying structure of the data.

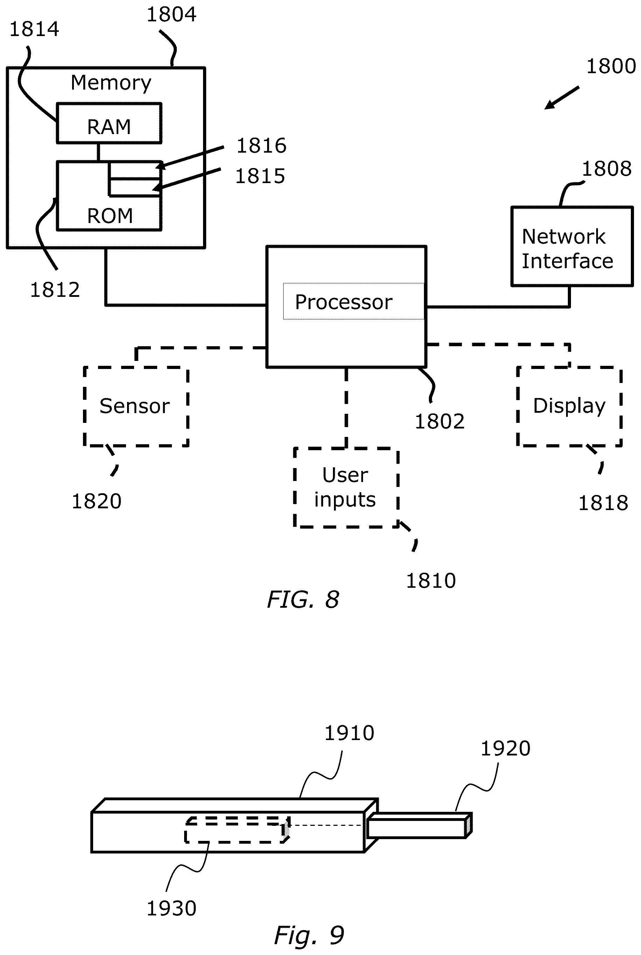

For completeness, FIG. 8 is a schematic diagram of components of one or more of the example embodiments described previously, which hereafter are referred to generically as a processing system 1800. The processing system 1800 may, for example, be comprised by the device referred to in the claims below.

The processing system 1800 may have a processor 1802, a memory 1804 closely coupled to the processor and comprised of a Random Access Memory (RAM) 1814 and a Read Only Memory (ROM) 1812, and, optionally, a user input 1810 and a display 1818. In addition to, or instead of the user input 1810, the processing system may comprise a sensor 1820. The processing system 1800 may obtain data (e.g., sensor data) via sensor 1820 and/or via network interface 1808. The processing system 1800 may comprise one or more network/apparatus interfaces 1808 for connection to a network/apparatus, e.g., a modem which may be wired or wireless. The network/apparatus interface 1808 may also operate as a connection to other apparatus such as device/apparatus which is not network side apparatus. Thus, direct connection between devices/apparatus without network participation is possible.

The processor 1802 is connected to the other components in order to control operation thereof.

The memory 1804 may comprise a non-volatile memory, such as a hard disk drive (HDD) or a solid-state drive (SSD). The ROM 1812 of the memory 1804 stores, amongst other things, an operating system 1815 and may store software applications 1816. The RAM 1814 of the memory 1804 is used by the processor 1802 for the temporary storage of data. The operating system 1815 may contain code which, when executed by the processor implements aspects of the methods 500, 600, and 700. Note that in the case of small device/apparatus the memory can be most suitable for small size usage i.e., not always a hard disk drive (HDD) or a solid-state drive (SSD) is used.

The processor 1802 may take any suitable form. For instance, it may be a microcontroller, a plurality of microcontrollers, a processor, or a plurality of processors.

The processing system 1800 may be a standalone computer, a server, a console, or a network thereof. The processing system 1800 and needed structural parts may be all inside device/apparatus such as IoT device/apparatus i.e., embedded to very small size.

In some example embodiments, the processing system 1800 may also be associated with external software applications. These may be applications stored on a remote server device/apparatus and may run partly or exclusively on the remote server device/apparatus. These applications may be termed cloud-hosted applications. The processing system 1800 may be in communication with the remote server device/apparatus in order to utilize the software application stored there.

FIG. 9 shows a tangible media, in the form of a removable memory unit 1910, storing computer-readable code which when run by a computer may perform methods according to example embodiments described above. The removable memory unit 1910 may be a memory stick, e.g., a Universal Serial Bus (USB) memory stick, having internal memory 1930 storing the computer-readable code. The internal memory 1930 may be accessed by a computer system via a connector 1920. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays (FPGA), application specific integrated circuits (ASIC), signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In some examples circuitry implements aspects of methods disclosed herein, such as methods 500, 600, and 700. For example, circuitry may be configured to perform at least one step of at least one of methods 500, 600, and 700, or any other method disclosed herein.

If desired, the different functions discussed herein may be performed in a different order and/or concurrently with each other. Furthermore, if desired, one or more of the above-described functions may be optional or may be combined. Similarly, it will also be appreciated that the diagrams of Figures -5 -7 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to comprise any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:
means for training a machine learning model comprising:

training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features of an input; and
training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising:

a prototype layer, caused to determine similarity scores between extracted features and a plurality of trainable prototypes; and
a prototypical classifier, caused to receive the similarity scores and output a classification of the input based on the similarity scores.

2. The apparatus of claim 1, further comprising:

means for sending an indication of the local updates to the first set of trainable parameters to a device participating in collaborative learning;
means for updating the second set of trainable parameters of the machine learning model based on the obtained local updates to the second set of trainable parameters;
means for receiving from a device participating in the collaborative learning an indication of updates to the first set of trainable parameters; and
means for updating the first set of trainable parameters based on the indicated updates.

3. The apparatus of claim 1 or claim 2, further comprising means for receiving the feature extractor of the collaboratively learned part of the model, and the local classifier of the local part of the model.

4. The apparatus of any preceding claim, wherein the means for training the machine learning model is configured to, in at least an initial round of training, train the first set of trainable parameters without training the second set of trainable parameters.

5. The apparatus of any preceding claim, wherein:

the collaboratively learned part of the machine learning model further comprises a collaboratively learned classifier configured to receive a representation of input data from the feature extractor and output a classification of the input data; and
the machine learning model further comprises a joint predictor configured to determine a classification based on classifications output by the local and collaboratively learned classifiers.

6. The apparatus of claim 5, wherein the means for training the machine learning model are configured to alternate between:

training the feature extractor and the local classifier; and
training the feature extractor and the collaboratively learned classifier; on a first dataset.

7. The apparatus of any preceding claim, wherein the feature extractor of the collaboratively learned part is configured to extract features by, for an input, defining a plurality of regions of said input and outputting a plurality of feature vectors, wherein respective feature vectors of the plurality of feature vectors are representative of features of data from respective defined regions of the plurality of defined regions of the input.

8. The apparatus of claim 7, wherein the prototype layer is configured to determine similarity scores between feature vectors of the extracted features and the trainable prototypes.

9. The apparatus of claim 8, wherein the trainable prototypes comprise respective trainable vectors in the same vector space as the plurality of feature vectors.

10. The apparatus of claim 9, wherein the trainable prototypes comprise respective trainable radii, and wherein determining a similarity between a feature vector and trainable prototype comprises determining a similarity score based on at least in part on whether the feature vector lies within the trainable radius of the trainable vector of the trainable prototype.

11. The apparatus of any preceding claim, wherein the classification comprises a probability distribution, the probability distribution comprising a plurality of probabilities, wherein probabilities of the plurality indicate probabilities of an input corresponding to respective classes of a set of classes.

12. The apparatus of any preceding claim, wherein the input comprises image data.

13. The apparatus of any preceding claim, wherein the input comprises sensor data.

14. A method comprising:
training a machine learning model comprising:

training a collaboratively learned part of the model by training a first set of trainable parameters to obtain local updates to the first set of trainable parameters, the first set of trainable parameters parameterising the collaboratively learned part, wherein the collaboratively learned part comprises a feature extractor configured to extract features; and
training a local part of the model by training a second set of trainable parameters to obtain local updates to the second set of trainable parameters, the second set of trainable parameters parameterising the local part, wherein the local part comprises a local classifier configured to receive the extracted features and output a classification of the input, the local classifier comprising:

a prototype layer, caused to determine similarity scores between extracted features and a plurality of trainable prototypes; and
a prototypical classifier, caused to receive the similarity scores and output a classification of the input based on the similarity scores.

15. A method comprising:

receiving an input; and
determining a classification of the input using a machine learning model, the machine learning model comprising a local part and a collaboratively learned part, the determining comprising:

determining extracted features of the input using a feature extractor of the collaboratively learned part, the feature extractor being caused to extract features of the input;
determining a set of similarity scores using a prototype layer of the local part of the model, the prototype layer being caused to determine similarities between extracted features of the input and a set of trained prototypes of the prototype layer; and
determining a classification of the input using a prototypical classifier of the local part of the model, the prototypical classifier being caused determine the classification based on the similarity scores.

*FIG. 1*

*Fig. 2*

*Fig. 3*

*Fig. 4*

Client 510   512 Server

Server sends model to client (f, g, h, s) — 520

Train local classifier g and h — 522

Initialisation

Training rounds

Train g, and h — 524

526

Train f, and s

Client sends local updates to f, s

528   530

Aggregation

Server sends aggregated updates to f, s

532

Classify inputs using f, h, g, and f and s. Use joint predictor to determine final classification — 534

Inference

500

*Fig. 5*

Train model having local part and collaboratively learned part — 610

Send updates to parameters of collaboratively learned part to a network node — 612

600

*Fig. 6*

Receive model

710

Train model having local part and collaboratively learned part

610

Send updates to parameters of collaboratively learned part to a network node

612

Receive updates to parameters of collaboratively learned part from the network node

712

700

*Fig. 7*

*FIG. 8*

*Fig. 9*

| | Europäisches Patentamt European Patent Office Office européen des brevets | **EUROPEAN SEARCH REPORT** | Application Number EP 25 21 9904 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUTONG DAI ET AL: "Tackling Data Heterogeneity in Federated Learning with Class Prototypes", ARXIV.ORG CORNELL UNIVERSITY LIBRARY, 201 OLIN LIBRARY CORNELL UNIVERSITY ITHACA, NY 14853, 6 December 2022 (2022-12-06), XP091387482, * abstract; table 1 * * section 1, last paragraph * * section 3.2 * * section 4.1 * * Page 3 * * equation (2) * * Listing 1 * * algorithm 1 * | 1-15 | INV. G06N3/0464 G06N3/098 G06N5/01 G06N20/10 G06N20/20 G06N3/09 |
| A | LI HAODONG ET AL: "FedCPG: A class prototype guided personalized lightweight federated learning framework for cross-factory fault detection", COMPUTERS IN INDUSTRY ELSEVIER, AMSTERDAM, NL, vol. 164, 16 September 2024 (2024-09-16), XP087659817, ISSN: 0166-3615, DOI: 10.1016/J.COMPIND.2024.104180 [retrieved on 2024-09-16] * the whole document * | 1-15 | |
| A | YUE TAN ET AL: "FedProto: Federated Prototype Learning across Heterogeneous Clients", ARXIV.ORG CORNELL UNIVERSITY LIBRARY, 201 OLIN LIBRARY CORNELL UNIVERSITY ITHACA, NY 14853, 5 March 2022 (2022-03-05), XP091168954, * the whole document * | 1-15 | |

TECHNICAL FIELDS SEARCHED (IPC)

G06N

The present search report has been drawn up for all claims

| Place of search | Date of completion of the search | Examiner |
|---|---|---|
| The Hague | 24 March 2026 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)